# EUROPEAN PATENT APPLICATION

(11) **EP 3 088 868 A1**
(43) Date of publication of application: **02.11.2016**
(21) Application number: 13900105.1
(22) Date of filing: 26.12.2013
(51) Int. Cl.: G01N 21/3563, G01N 21/55

(54) **APPARATUS FOR SIMULTANEOUSLY MEASURING WHITENESS AND COATING AMOUNT**

(71) Applicant: POSCO, Donghaean-ro, Nam-gu, Pohang-si Gyeongsangbuk-do 790-300 (KR)
(72) Inventor: HONG, Jae Hwa, Pohang-si Gyeongsangbuk-do 790-826 (KR)
(74) Representative: Potter Clarkson LLP
(86) International application number: PCT/KR2013/012187
(87) International publication number: WO 2015/099227

(57) **Abstract**

An apparatus for simultaneously measuring whiteness and coating amount, according to one embodiment of the present invention, comprises: a light-emitting unit arranged at a predetermined distance from a test piece and irradiating the test piece with light; a filter unit arranged between the light-emitting unit and the test piece and allowing either an infrared ray or a visible ray to selectively pass therethrough; a detection unit arranged at a predetermined distance from the test piece and detecting either the infrared ray or the visible ray to be reflected from the test piece; and a calculation unit connected with the detection unit, calculating the coating amount according to the amount of the infrared ray detected by the detection unit, and calculating the whiteness according to the amount of the visible ray detected by the detection unit. Since the whiteness and the coating amount can be measured by the apparatus for simultaneously measuring the whiteness and the coating amount according to one embodiment of the present invention, work efficiency is increased and capital expenditure for equipment can be reduced.

## Description

### [Technical Field]

The present invention relates to an apparatus for simultaneously measuring whiteness and a coating amount, and more particularly, to an apparatus for simultaneously measuring whiteness and a coating amount which simultaneously measures whiteness of a steel sheet and a coating amount of a coating layer thereon.

### [Background Art]

Generally, a steel sheet is plated with a metal such as zinc or is coated with a resin to obtain corrosion resistance of the steel sheet. In addition, a resin which coats the steel sheet has advantages of providing fingerprint resistance, insulation, and the like as well as the corrosion resistance of the steel sheet. Accordingly, there is a need to accurately measure and manage a coating amount of a resin.

A coating amount of such a resin is measured by a method in which infrared light is incident on a steel sheet, an amount of the infrared light absorbed by a resin layer is measured, and the amount is converted to the coating amount of resin.

Meanwhile, whiteness is an important factor for evaluating quality of a surface of a steel sheet, and the requirement of products with excellent whiteness is gradually increasing. Accordingly, the whiteness needs to be accurately measured and managed.

The whiteness is generally measured by a method in which visible light is incident on a steel sheet, an amount of light reflected by the steel sheet is measured, and the amount is converted to the whiteness.

However, since apparatuses for measuring whiteness and a coating amount of a resin are separately installed, problems exist of decreased work efficiency as well as double occupancy of space. There is also a problem of increased investment cost because each apparatus is expensive.

### [Disclosure]

### [Technical Problem]

The present invention is directed to providing an apparatus for simultaneously measuring whiteness and a coating amount which simultaneously measures whiteness and a coating amount.

### [Technical Solution]

One aspect of the present invention provides an apparatus for simultaneously measuring whiteness and a coating amount includes: a light-emitting unit which is disposed to be spaced a predetermined distance from a test piece and irradiates the test piece with light; a filter unit which is disposed between the light-emitting unit and the test piece and selectively transmits one of infrared light and visible light; a detection unit which is disposed to be spaced a predetermined distance from the test piece and detects one of infrared light and visible light reflected by the test piece; and a calculation unit which is connected to the detection unit, calculates a coating amount depending on an amount of infrared light detected by the detection unit, and calculates whiteness depending on an amount of visible light detected by the detection unit.

The filter unit may include: at least one infrared light filter which transmits light in a wavelength region of infrared light; and at least one visible light filter which transmits light in a wavelength region of visible light.

The filter unit may be rotatably disposed and rotate such that any one of the infrared light filter and the visible light filter is disposed in a path of light emitted from the light-emitting unit. In addition, the filter unit may include a plurality of visible light filters which transmit light in different wavelength regions from each other in a wavelength region of visible light.

The detection unit may include: an infrared light detection device which detects the infrared light; and a visible light detection device which detects the visible light. In addition, the detection unit further may include a half mirror, and the half mirror may transmit some light reflected by the test piece to one of the infrared light detection device and the visible light detection device and reflect the rest to the other

Meanwhile, another aspect of the present invention provides an apparatus for simultaneously measuring whiteness and a coating amount including: a first mirror which is disposed between a filter unit and a test piece and reflects light transmitted by the filter unit to the test piece; and a second mirror which is disposed between the test piece and a detection unit and reflects light reflected by the test piece to a half mirror.

### [Advantageous Effects]

According to an exemplary embodiment of the present invention, since whiteness and a coating amount of a steel sheet can be simultaneously measured, working efficiency can be improved as well as apparatus space occupancy can be reduced.

In addition, according to an exemplary embodiment of the present invention, since an apparatus capable of simultaneously measuring whiteness and a coating amount of a steel sheet is provided, installation of an additional apparatus is not needed. Accordingly, investment cost can be decreased.

### [Description of Drawings]

FIG. 1 is a view illustrating an apparatus for simultaneously measuring whiteness and a coating amount according to one embodiment of the present invention.
FIG. 2 is a view illustrating a filter unit according to one embodiment of the present invention.
FIG. 3 is a view illustrating an apparatus for simultaneously measuring whiteness and a coating amount according to another embodiment of the present invention.

### [Modes of the Invention]

While the invention can be modified in various ways and take on various alternative forms, specific embodiments thereof are shown in the drawings and described in detail below as examples. However, it should be understood that there is no intent to limit the invention to the particular forms disclosed, but on the contrary, the invention covers all modifications, equivalents, and alternatives falling within the spirit and scope of the invention.

It will be understood that, although the terms "first," "second," etc. may be used herein to describe various elements, these elements should not be limited by these terms. These terms are only used to distinguish one element from another. For example, a first element could be termed a second element, and a second element could similarly be termed a first element without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements.

The terminology used herein to describe embodiments of the invention is not intended to limit the scope of the invention. The articles "a," and "an" are singular in that they have a single referent, however the use of the singular form in the present document should not preclude the presence of more than one referent. In other words, elements of the invention referred to in the singular may number one or more, unless the context clearly indicates otherwise. It will be further understood that the terms "comprise," "comprising," "include," and/or "including," when used herein, specify the presence of stated features, numbers, steps, operations, elements, and/or components but do not preclude the presence or addition of one or more other features, numbers, steps, operations, elements, components, and/or groups thereof.

Unless otherwise defined, all terms (including technical and scientific terms) used herein are to be interpreted as is customary in the art to which this invention belongs. It will be further understood that terms in common usage should also be interpreted as is customary in the relevant art and not in an idealized or overly formal sense unless expressly so defined herein.

Hereinafter, exemplary embodiments of the invention will be described in detail with reference to the accompanying drawings. The same or corresponding elements will be consistently denoted by the same respective reference numerals and described in detail no more than once regardless of drawing symbols.

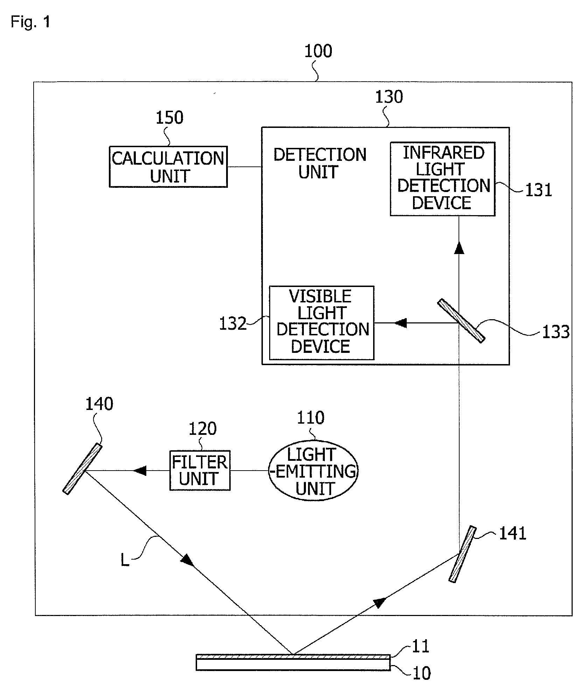

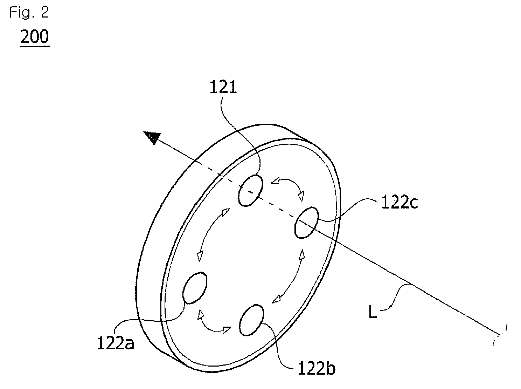

FIG. 1 is a view illustrating an apparatus for simultaneously measuring whiteness and a coating amount according to one embodiment of the present invention, and FIG. 2 is a view illustrating a filter unit according to one embodiment of the present invention.

Referring to FIGS. 1 to 2, an apparatus for simultaneously measuring whiteness and a coating amount 100 according to one embodiment of the present invention includes a light-emitting unit 110, a filter unit 120, a detection unit 130, and a calculation unit 150.

The light-emitting unit 110 is disposed to be spaced a predetermined distance from a test piece 10 and irradiates the test piece 10 with light. Such a test piece 10 (hereinafter, a steel sheet) may be, for example, a steel sheet 10. To this end, the light-emitting unit 110 may include a light source which emits light in a predetermined wavelength region. Here, the predetermined wavelength region may include wavelength regions of infrared light and visible light.

The filter unit 120 is disposed between the light-emitting unit 110 and the steel sheet 10 and selectively transmits one of infrared light and visible light. For example, the filter unit 120 may selectively transmit light in any one wavelength region of infrared light and visible light among light of predetermined wavelength regions emitted from the light emitting unit 110. To this and, the filter unit 120 may include an infrared light filter 121 which transmits light in a wavelength region of infrared light and a visible light filter 122 which transmits light in a wavelength region of visible light. In addition, as illustrated in FIG. 2, as the filter unit 120 is rotatably disposed, the filter unit 120 may be rotated so that any one of the infrared light filter 121 and the visible light filter 122 is positioned in the path of light emitted from the light-emitting unit 110.

In addition, as illustrated in FIG. 2, the filter unit 120 may include three visible light filters 122a, 122b, and 122c for transmitting visible light corresponding to each of the three sections into which the wavelength region of visible light is divided. However, the filter unit 120 is not limited thereto and may include a plurality of visible light filters 122 which transmit visible light in wavelength regions different from each other within a wavelength region of the visible light.

The detection unit 130 is disposed to be spaced a predetermined distance from the steel sheet 10 and may detect one of infrared light and visible light reflected by the steel sheet 10. To this end, the detection unit 130 may include an infrared light detection device 131 which detects infrared light and a visible light detection device 132 which detects visible light.

In addition, the detection unit 130 may further include a half mirror 133. Such a half mirror 133 may transmit some of the incident light and reflect the rest. For example, the half mirror 133 may transmit some of the light reflected by the steel sheet 10 to the infrared light detection device 131 and reflect the rest to the visible light detection device 132.

The calculation unit 150 is connected to the detection unit 130, calculates a coating amount depending on an amount of infrared light detected by the detection unit 130, and calculates whiteness depending on an amount of visible light detected by the detection unit 130. For example, the calculation unit 150 may calculate a coating amount of a resin 11 which coats the steel sheet 10 depending on the amount of infrared light detected by the infrared light detection device 131. In addition, the calculation unit 150 may calculate whiteness of the steel sheet 10 depending on the amount of visible light detected by the visible light detection device 132.

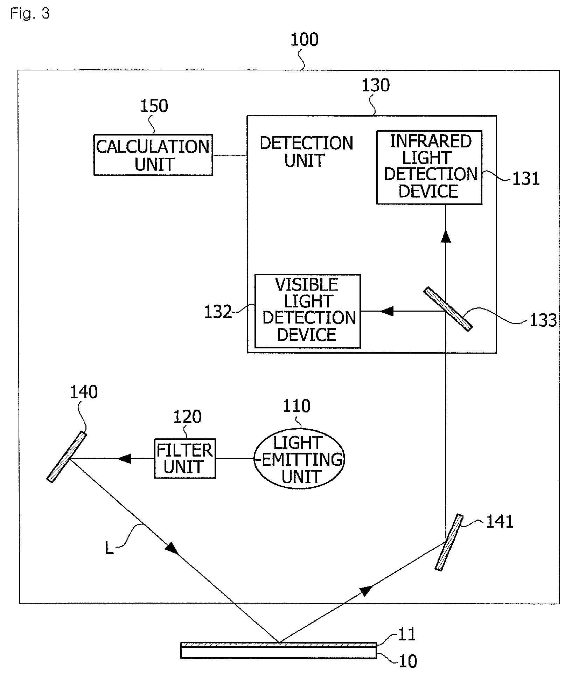

FIG. 3 is a view illustrating an apparatus for simultaneously measuring whiteness and a coating amount 100 according to another embodiment of the present invention.

Referring to FIG. 3, an apparatus for simultaneously measuring whiteness and a coating amount 100 according to another embodiment of the present invention may further include a first mirror 140 and a second mirror 141.

The first mirror 140 is disposed between a filter unit 120 and a steel sheet 10 and reflects light transmitted by the filter unit 120 to the steel sheet 10. In addition, the second mirror 141 is disposed between the steel sheet 10 and a detection unit 130 and reflects light reflected by the steel sheet 10 to a half mirror 133. Accordingly, since a path of light may be adjusted due to the apparatus for simultaneously measuring whiteness and a coating amount 100 according to another embodiment of the present invention including the first mirror 140 and the second mirror 141, the apparatus can be manufactured to have a smaller size. Accordingly, apparatus space occupancy can be reduced.

While the present invention has been described with reference to exemplary embodiments, it will be understood by those skilled in the art that various changes and modifications may be made without departing from the spirit and scope of the present invention as defined by the appended claims

### [Reference Numerals]

- 10:: TEST PIECE (STEEL SHEET)
- 11:: RESIN COATING LAYER
- 100:: APPARATUS FOR SIMULTANEOUSLY MEASURING WHITENESS AND COATING AMOUNT
- 110:: LIGHT-EMITTING UNIT
- 120:: FILTER UNIT
- 121:: INFRARED LIGHT FILTER
- 122:: VISIBLE LIGHT FILTER
- 130:: DETECTION UNIT
- 131:: INFRARED LIGHT DETECTION DEVICE
- 132:: VISIBLE LIGHT DETECTION DEVICE
- 133:: HALF MIRROR
- 140:: FIRST MIRROR
- 141:: SECOND MIRROR
- 150:: CALCULATION UNIT

## Claims

1. An apparatus for simultaneously measuring whiteness and a coating amount, comprising:
a light-emitting unit which is disposed to be spaced a predetermined distance from a test piece and irradiates the test piece with light;
a filter unit which is disposed between the light-emitting unit and the test piece and selectively transmits one of infrared light and visible light;
a detection unit which is disposed to be spaced a predetermined distance from the test piece and detects one of infrared light and visible light reflected by the test piece; and
a calculation unit which is connected to the detection unit, calculates a coating amount depending on an amount of infrared light detected by the detection unit, and calculates whiteness depending on an amount of visible light detected by the detection unit,

2. The apparatus of claim 1, wherein the filter unit includes:
at least one infrared light filter which transmits light in a wavelength region of infrared light; and
at least one visible light filter which transmits light in a wavelength region of visible light.

3. The apparatus of claim 2, wherein the filter unit is rotatably disposed and rotates such that any one of the infrared light filter and the visible light filter is disposed in a path of light emitted from the light-emitting unit.

4. The apparatus of claim 2, wherein the filter unit includes a plurality of visible light filters which transmit light in wavelength regions different from each other in a wavelength region of visible light.

5. The apparatus of claim 1, wherein the detection unit includes:
an infrared light detection device which detects the infrared light; and
a visible light detection device which detects the visible light.

6. The apparatus of claim 5, wherein the detection unit further includes a half mirror, and the half mirror transmits some light reflected by the test piece to any one of the infrared light detection device and the visible light detection device and reflects the rest to the other.

7. The apparatus of claim 1, further comprising:
a first mirror which is disposed between a filter unit and a test piece and reflects light transmitted by the filter unit to the test piece; and
a second mirror which is disposed between the test piece and a detection unit and reflects light reflected by the test piece to a half mirror.
